# EUROPÄISCHE PATENTSCHRIFT

(11) **EP 1 642 768 B1**
(45) Veröffentlichungstag und Bekanntmachung des Hinweises auf die Patenterteilung: **20.02.2008**
(21) Anmeldenummer: 05107507.5
(22) Anmeldetag: 16.08.2005
(51) Int. Cl.: B60Q 1/48, G01S 7/56, B60K 35/00, B62D 15/02

(54) **Verfahren zur Anzeige eines Fahrzeugfahrraums**
Procedure for displaying the vehicle driving area
Procédé d'affichage de la zone de conduite d'une automobile

(30) Priorität: 30.09.2004 DE 102004047481
(43) Veröffentlichungstag der Anmeldung: 05.04.2006
(73) Patentinhaber: Robert Bosch GmbH, 70442 Stuttgart (DE)
(72) Erfinder: Lee, Wei-Chia, 71229 Leonberg (DE); Rossmeier, Markus, 56170 Benndorf (DE)

(56) Entgegenhaltungen:
- EP-A- 1 400 410

## Beschreibung

### Stand der Technik

Die Erfindung geht aus von einem Verfahren zur Anzeige eines Fahrzeugfahrraums nach der Gattung des Hauptanspruchs. Es sind bereits Fahrerassistenzsysteme bekannt, die den Fahrer beim Rangieren sowie bei einem Einparken und Ausparken unterstützen. Die Fahrerassistenzsysteme weisen hierzu insbesondere Ultraschallsensoren auf, die Abstände zu Hindernissen in der Fahrzeugumgebung erfassen. Nähert sich ein Hindernis dem Fahrzeug zu sehr an, wird eine optische und/oder akustische Warnung an den Fahrer ausgegeben. Ferner sind Systeme bekannt, die eine Parklücke vermessen und auf Basis der Parklückenvermessung den Fahrer bei einem Einparken in die Parklücke unterstützen. Eine solche Einparkunterstützung wird insbesondere vom einem Fahrer aktiviert, wenn er bei einem längsseitigen Rückwärtseinparken in eine Parklücke zwischen zwei am Straßenrand geparkten Fahrzeugen unterstützt werden möchte. Bei einem ersten, längsseitigen Vorbeifahren an der Parklücke wird von dem System mit geeigneten, insbesondere an der Fahrzeugseite angeordneten Abstandssensoren die Parklückenlänge vermessen. Ferner wird die gefahrene Wegstrecke kontinuierlich vermessen, sodass die Position des Fahrzeugs in Bezug zu der Position der Parklücke gesetzt werden kann. Nach dem Passieren der Parklücke wird der Fahrer aufgefordert, anzuhalten und in die Parklücke zurückzusetzen. Während des Zurücksetzens gibt das Fahrerassistenzsystem dem Fahrer Hilfestellungen, wie er optimal in die Parklücke zurücksetzen kann, um mit möglichst wenig Lenkaufwand bzw. Rangieraufwand kollisionsfrei in die Parklücke einzuparken. Um dem Fahrer den Lenkwinkel anzuzeigen, ist es z.B. bekannt, Pfeile darzustellen, die dem Fahrer angeben, ob es nach links lenken soll oder nach rechts lenken soll. Soll der Fahrer anhalten, wird ihm z.B. ein Stoppzeichen angezeigt.

Aus der EP 1400 410 A2 ist ein Fahrzeugassistenzsystem bekannt, bei dem mittels einer Kamera ein Bild in einer Fahrrichtung eines Fahrzeugs aufgenommen wird. Ferner wird der aktuell eingeschlagene Lenkwinkel erfasst. Ein auf Basis des Lenkwinkels erfasster Fahrweg wird in einer Anzeige dargestellt. Ferner wird die Helligkeit der Fahrzeugumgebung erfasst, wobei einer farbliche Darstellung so gewählt wird, dass der in der Anzeige dargestellte Fahrweg in der Bilddarstellung erkennbar ist.

### Vorteile der Erfindung

Das erfindungsgemäße Verfahren zur Anzeige eines Fahrzeugfahrraums mit den Merkmalen des Hauptanspruchs hat demgegenüber den Vorteil, dass dem Fahrer eine Information darüber, welche Fahrrichtung er wählen soll, in einem perspektivisch bzw. dreidimensionalen dargestellten Fahrraum des Fahrzeugs angezeigt wird. Der Fahrraum ist dabei der Raum vor oder hinter dem Fahrzeug, in den der Fahrer das Fahrzeug - je nach gewählter Fahrtrichtung vor oder zurück- steuern kann. Der Fahrer kann somit durch die erfindungsgemäße Darstellung des Fahrraums eine Beziehung zwischen der Lenkrichtung des Fahrzeugs und dem Fahrzeugfahrraum herstellen. Besonders vorteilhaft ist hierbei, dass dem Fahrer die Lenkrichtung durch eine Variation der Lichtverhältnisse so dargestellt wird, dass er den Lenkwinkel einfach und intuitiv erfassen kann. Insbesondere kann dadurch, dass die Lichtverhältnisse auch kontinuierlich variiert werden können, dem Fahrer leicht verständlich mitgeteilt werden, um welchen Grad er einen Lenkwinkeleinschlag vornehmen muss. Hierdurch wird einerseits ein Übersteuern durch den Fahrer vermieden, andererseits wird eine genauere Lenkeinstellung ermöglicht. Indem die Lichtverhältnisse für eine Darstellung ausgenutzt werden, wird zudem eine Überflutung des Fahrers mit Symbolen, Pfeilen o.ä. im Bild dargestellten Zeichen vermieden, die den Fahrer überfordern könnten.

Durch die in den Unteransprüchen aufgeführten Maßnahmen sind vorteilhafte Weiterbildungen und Verbesserungen des im Hauptanspruch angegebenen Verfahrens zur Anzeige eines Fahrzeugfahrraums möglich. Besonders vorteilhaft ist, dass die Richtung, in die das Fahrzeug fahren soll, heller als eine Umgebung dargestellt wird. Durch eine solche Hervorhebung ist eine Richtung intuitiv erkennbar.

Ferner ist vorteilhaft, die Darstellung des Fahrzeugfahrraums aus den erfassten Abständen von Umfeldsensoren zu ermitteln. Hierdurch kann ein Bild dargestellt werden, das z.B. dem Rückraum des Fahrzeugs entspricht, ohne dass eine Kamera im Fahrzeug vorgesehen zu sein braucht.

Wird ein Kamerabild erfasst, so kann aus den ermittelten Bildern der Fahrzeugumgebung auf einfache Weise der Fahrraum dargestellt werden. Hierbei ist es insbesondere vorteilhaft, die Veränderung der Lichtverhältnisse in das Bild der Fahrzeugumgebung einzublenden.

Es ist ferner vorteilhaft, Lichtquellen am Fahrzeug so vorzusehen, dass die Variation der Lichtverhältnisse durch die Lichtquellen erzeugt wird. Hierdurch kann auf eine Bildnachbearbeitung verzichtet werden, wenn der Fahrzeugrückraum mit einer Kamera aufgenommen wird. Hierdurch wird der Rechenaufwand bei der Bildbearbeitung vermindert.

Ferner ist es vorteilhaft, eine Zielposition des Fahrzeugs anzuzeigen, sodass sich der Fahrer an der Zielposition beim Einparken orientieren kann.

Um den Fahrer vor Hindernissen zu warnen, können die Hindernisse insbesondere durch Symbole in der Anzeige besonders hervorgehoben werden.

Insbesondere bei einer Verwendung zur Einparkunterstützung eines Kraftfahrzeugs bietet das erfindungsgemäße Verfahren den Vorteil, dass ein Fahrer intuitiv den unter Nutzung des erfindungsgemäßen Verfahrens dargestellten Einparkhinweisen folgen kann.

### Zeichnung

Ausführungsbeispiele der Erfindung sind in der Zeichnung dargestellt und in der nachfolgenden Beschreibung näher erläutert. Es zeigen
- Figur 1: ein Fahrzeug mit einem Fahrerassistenzsystem zur Durchführung des erfindungsgemäßen Verfahrens,
- Figur 2: eine schematisch dargestellte Einparksituation,
- Figuren 3 und 4: Ausführungsbeispiele für erfindungsgemäße Anzeigendarstellungen bei dem erfindungsgemäßen Verfahren.

### Beschreibung des Ausführungsbeispiels

Das erfindungsgemäße Verfahren zur Anzeige eines Fahrzeugfahrraums wird insbesondere in Kraftfahrzeugen verwendet, die am Straßenverkehr teilnehmen. Bei der Darstellung kann der vor dem Fahrzeug liegende Fahrraum, aber insbesondere auch der hinter dem Fahrzeug liegende Fahrraum dargestellt werden. Insbesondere die Darstellung des Fahrzeugrückraums ist vorteilhaft, da der Fahrzeugrückraum selbst bei einer Limousine im allgemeinen schlechter eingesehen werden kann, als der vor dem Fahrzeug liegende Raum. Ein schwieriges Fahrmanöver stellt im Allgemeinen das Einparken in eine parallel zum Straßenverlauf orientierte Parklücke zwischen zwei Hindernissen dar. Daher ist die vorliegende Erfindung im Folgenden anhand einer Darstellung des Fahrzeugrückraums bei einem derartigen Einparkvorgang in eine längs zum Straßenverlauf orientierte Parklücke dargestellt.

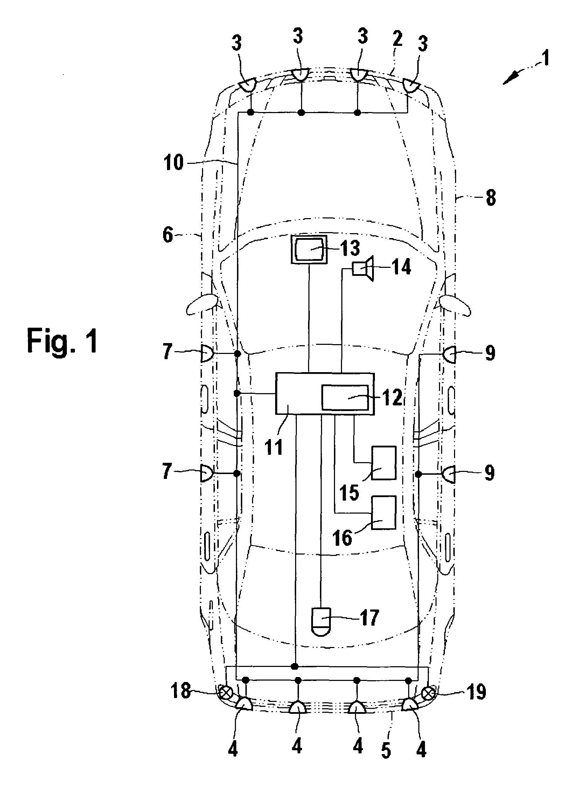

In der Figur 1 ist ein Fahrzeug 1 schematisch dargestellt, das zur Durchführung des erfindungsgemäßen Verfahrens ausgestattet ist. Das Fahrzeug 1 weist hierzu an der Fahrzeugvorderseite 2 Abstandssensoren 3 auf, die bevorzugt als Ultraschallsensoren ausgeführt sind. Anstelle von Ultraschallsensoren können jedoch auch beliebige andere Abstandssensoren, z.B. Radarsensoren oder kapazitive Abstandssensoren, verwendet werden. Ebenfalls sind Abstandssensoren 4 an der Fahrzeugrückseite 5 angeordnet. In einer bevorzugten Ausführungsform können zur Vermessung der Parklücke auch an der linken Fahrzeugseite 6 Abstandssensoren 7 angeordnet sein. Insbesondere sind an der rechten Fahrzeugseite 8 Abstandssensoren 9 angeordnet. Für die Abstandssensoren können gegebenenfalls auch unterschiedliche Messtechniken verwendet werden. Bevorzugt sind an den Seiten 6, 8 mindestens zwei und an der Vorderseite 2 und an der Rückseite 5 wenigstens jeweils vier Abstandssensoren angeordnet. Die Anzahl der Abstandssensoren kann variiert werden. Die Abstandssensoren 3, 4, 7, 9 werden über einen Datenbus 10 ausgewertet. Die ermittelten Signale werden zur Auswertung an eine Auswerteeinheit 11 weitergeleitet, die aus den Abstandsdaten die Abstände zu Hindernissen in der Fahrzeugumgebung bestimmt. Hierzu weist die Auswerteeinheit 11 eine Recheneinheit 12 auf. Kommt ein Hindernis dem Fahrzeug zu nahe, so wird der Fahrer über eine optische Anzeige 13 und/oder über einen Lautsprecher 14 gewarnt. In der Anzeige 13 sind entsprechende Warnsymbole darstellbar, während über den Lautsprecher 14 ein Signalton ausgegeben wird. Ferner kann die Auswerteeinheit 11 auf einen Wegstreckensensor 15 zugreifen, der der Auswerteeinheit 11 die zurückgelegte Wegstrecke meldet. Die Wegstrecke wird insbesondere über Raddrehzahlsensoren ermittelt. Ferner greift die Auswerteeinheit 11 auf einen Lenkwinkelsensor 16 zu. Der Lenkwinkelsensor 16 übermittelt der Auswerteeinheit 11 den aktuelle eingeschlagenen Lenkwinkel des Fahrzeugs.

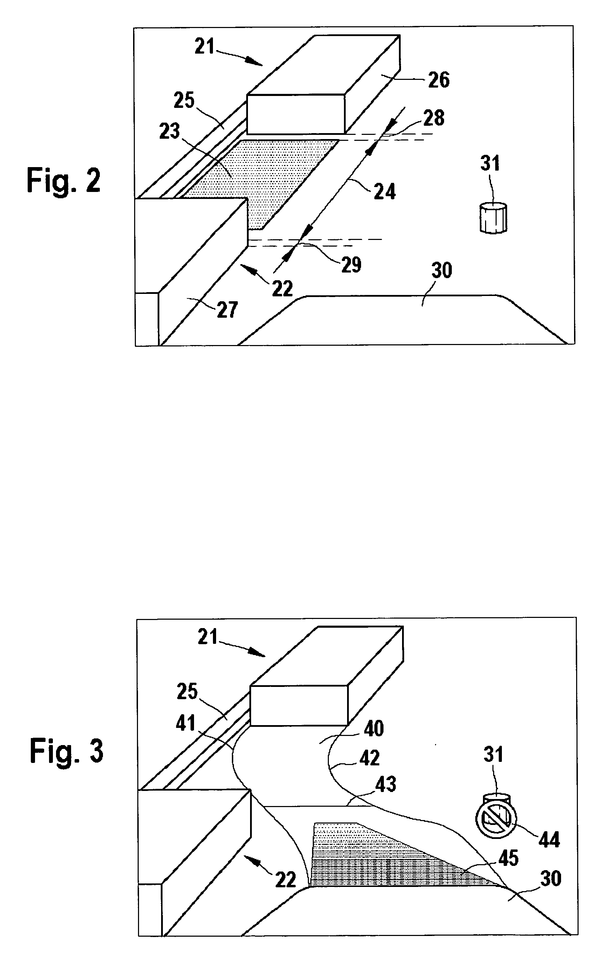

Fährt das Fahrzeug 1 an einer Parklücke vorbei, so vermessen z.B. die seitlich angeordneten Abstandssensoren 9 die Parklücke. Eine entsprechende Parklücke ist in der Figur 2 dargestellt. Zwischen einem ersten Fahrzeug 21 und einem zweiten Fahrzeug 22 wurde eine Parklücke 23 ermittelt, die eine ausreichende Länge 24 hat. Eine Parklücke liegt dann vor, wenn eine hinreichende Tiefe zwischen einem Bordstein 25 und den Seitenfronten 26 bzw. 27 des ersten und zweiten Fahrzeugs bestimmt wird. Die Parklücke hat dann eine ausreichende Länge, wenn die Parklücke die geforderte Tiefe wenigstens über eine Länge aufweist, die für ein Einparken des Fahrzeugs erforderlich ist. Bei der Bestimmung der Parklückenlänge wird ein Sicherheitsabstand 28 zu dem ersten Fahrzeug und ein Sicherheitsabstand 29 zu dem zweiten Fahrzeug 22 berücksichtigt. In der Figur 2 ist eine Darstellung eines Fahrzeugrückraums gezeigt, wie sie in der Anzeige 13 erfolgt. Zur besseren Orientierung wird ein Stoßfänger 30 des Fahrzeugs 1 in das Bild mit eingeblendet. In einer ersten Ausführungsform kann die in der Figur 2 gezeigte Darstellung aus den mit den Abstandssensoren ermittelten Daten berechnet werden. In einer anderen Ausführungsform kann das dargestellte Bild auch von einer Kamera 17 aufgenommen werden, die insbesondere an der Fahrzeugrückseite des Fahrzeugs 1 angebracht ist. Die Kamera 17 beobachtet den Fahrzeugrückraum. Sie ist insbesondere als eine Weitwinkelkamera ausgeführt. Die von der Kamera 17 erfassten Bilddaten werden an die Auswerteeinheit 11 weitergeleitet. Bevorzugt werden die aufgenommenen Bilddaten mittels der Recheneinheit 12 verarbeitet, insbesondere entzerrt, wenn es sich um eine starke Weitwinkelaufnahme handelt. Die bearbeiteten Bilddaten werden in der Anzeige 13 dargestellt. In einer weiteren Ausführungsform können die aufgenommenen Bilddaten auch zunächst unbearbeitet an die Anzeige 13 weitergeleitet werden. In dem Fahrraum ist gemäß der Figur 2 zusätzlich ein Hindernis 31 erkennbar, z.B. ein Blumenkübel. Gegen dieses Hindernis 31 darf der Fahrer während des Einparkvorgangs das Fahrzeug nicht steuern.

Wurde die Parklücke vermessen und ist der Fahrer mit dem Fahrzeug an der Parklücke vorbeigefahren, so wird er durch die Anzeige 13 und/oder den Lautsprecher 14 dazu aufgefordert, sein Fahrzeug zu stoppen und nun rückwärts in die Parklücke 23 einzuparken. Die Zielparkfläche ist in der Figur 2 hervorgehoben dargestellt. Um die Parklücke zu erreichen, wird zunächst eine Bahn berechnet, die das Fahrzeug fahren muss, um die Parklücke zu erreichen.

In der Figur 3 ist eine perspektivische Darstellung des Fahrraums gezeigt. Die Anzeige 13 ist insbesondere als eine Anzeige in der Mittelkonsole des Fahrzeugs ausgeführt. Sie dient z.B. der Ausgabe eines Navigationssystems. In einer weiteren Ausführungsform kann die Anzeige 13 auch in ein Kombinationsinstrument in dem Fahrzeug integriert sein. Ferner ist es auch möglich, eine dreidimensionale Anzeige in Form eines sogenannten Head-Up-Displays vorzusehen, bei dem ein virtuelles Bild auf eine Fahrzeugscheibe, insbesondere in die Windschutzscheibe, projiziert wird.

In der Figur 3 ist diese Bahn, die das Fahrzeug fahren soll, die Trajektorie 40 mit einer linken Begrenzung 41 und einer rechten Begrenzung 42 in der Anzeige 13 dargestellt. Ferner ist auch ein Umlenkpunkt 43 dargestellt, ab dem der Fahrer den Lenkeinschlag wechseln muss. Mittels der Anzeige, die erfindungsgemäß betrieben wird, werden dem Fahrer Hinweise gegeben, das Fahrzeug in die Parklücke hineinzulenken. Hierzu wird ein Bereich 45 zwischen der linken Begrenzung 41, der rechten Begrenzung 42, dem Stoßfänger 30 und der den Umlenkpunkt kennzeichnenden Linie 43 hervorgehoben dargestellt. Eine Darstellung der Begrenzungslinien selbst muss dabei nicht erfolgen, kann jedoch in einer weiteren Ausführungsform möglich sein. In dem hier vorliegenden Ausführungsbeispiel wird der Bereich 45 heller dargestellt. Insbesondere wird der Bereich in Richtung der linken Begrenzung 41 heller dargestellt. Durch diese, in Richtung der linken Begrenzung 41 orientierte heller Darstellung wird dem Fahrer vermittelt, dass er das Lenkrad nach links drehen muss. Dies liegt daran, dass der aktuell eingestellte Lenkwinkel, der über den Lenkwinkelsensor 16 erfasst wird, einen Lenkwinkeleinschlag anzeigt, der zu weit nach rechts gereichtet ist, um der Trajektorie 40 folgen zu können. Damit eine Korrektur entsprechend vorgenommen werden kann, wird dem Fahrer somit erfindungsgemäß angezeigt, die Lenkung nach links zu bewegen.

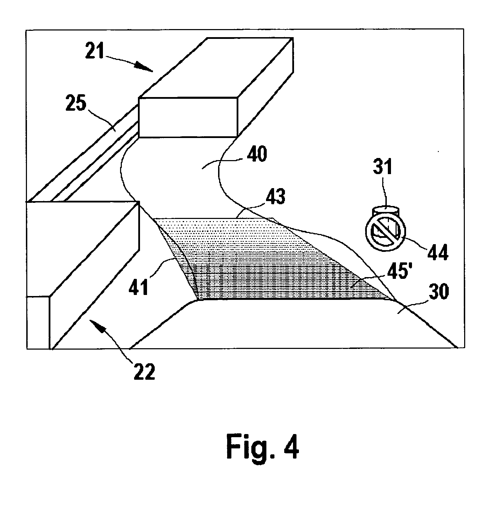

Führt der Fahrer die notwendige Lenkkorrektur vor, so dehnt sich der hervorgehobene Bereich bis zu dem Umlenkpunkt 43 aus. Der Fahrer weiß nun, dass er bis zu dem Umlenkpunkt fahren kann, ohne dass eine weitere Lenkkorrektur vorzunehmen ist. Dies erkennt er auch daran, dass in dem gesamten Fahrraum vor dem Stoßfänger 30 die Lichtverteilung nun gleichmäßig ist. Hätte der Fahrer das Lenkrad nun zu weit nach links gedreht, so würde sich die Fläche 45', die in der Figur 4 dargestellt ist, wieder verkleinern und ein Schwerpunkt der Helligkeit würde sich, ausgehend von dem Stoßfänger 30, nach rechts in Richtung auf die rechte Begrenzung 42 verschieben. Somit ist es einem Fahrer möglich, eine genaue Einstellung der Lenkung vorzunehmen, um das Fahrziel, die Parklücke 23, zu erreichen.

Das Hindernis 31 wird durch ein gesondertes Warnsymbol 44 so hervorgehoben, dass ein Fahrer es in der Darstellung besonders beachten kann. Insbesondere würde das Hindernis aber auch besonders hervorgehoben, z.B. in rot eingefärbt, wenn der hervorgehoben dargestellte Fahrweg des Fahrzeugs hinter dem Stoßfänger 30 sich mit der Position des Hindernisses überschneiden würde. Damit wird ein Fahrer auf ein derartige positioniertes Hindernis besonders dann hingewiesen, wenn es in seinem Fahrweg liegt.

Anstelle einer helleren Darstellung kann auch eine Beleuchtung in einer Farbe simuliert werden, um die Aufmerksamkeit des Fahrers auf die zu regelnde Fahrtrichtung zu lenken.

In einer ersten Ausführungsform wird die in den Figuren 3 und 4 gezeigte Darstellung anhand der Sensordaten der Abstandssensoren 3, 4, 7, 9 von der Recheneinheit 12 berechnet und in der Anzeige 13 ausgegebene. In einer weiteren Ausführungsform ist es auch möglich, lediglich den Bereich 45, 45' zu berechnen und einem aufgenommenen Kamerabild so zu überlagern, dass der Bereich 45, 45' in der Anzeige 13 in erfindungsgemäßer Weise heller dargestellt wird.

In einer weiteren Ausführungsform können auch am Fahrzeug Lichtquellen 18, 19 angeordnet sein, die von der Auswerteeinheit 11 wechselbar gesteuert werden können. In einer ersten Ausführungsform handelt es sich hierbei um Lichtquellen im sichtbaren Licht, sodass ein von den Lichtquellen beleuchteter Fahrzeugrückraum von der Kamera 17 aufgenommen wird. Durch eine entsprechende Ansteuerung der Lichtquellen 18, 19 durch die Auswerteeinheit 11 wird in dem Bild der Lichteindruck gemäß den Figuren 3, 4 erzeugt. Die Lichtquellen können in die regulären Fahrzeugscheinwerfer integriert sein. Sie können aber auch als zusätzliche Lichtquellen am Fahrzeug angeordnet werden.

In einer weiteren Ausführungsform können die Lichtquellen 18, 19 auch Infrarotlichtquellen sein, wobei die Kamera 17 in diesem Fall ebenfalls als eine Infrarotkamera ausgeführt ist, die in dem Infrarotbereich der Kamera empfindlich ist. Die Lichtquellen beleuchten dann den Fahrzeugrückraum mit Infrarotlicht derart, dass die Bereiche 45, 45' entsprechend in der Anzeige 13 erscheinen. Eine Störung anderer Fahrzeuge wird bei einer Beleuchtung im Infrarotbereich vermieden.

Die Lichtquellen 18, 19 sind mit einem Helligkeitsregler so ausgestattet, dass sie mit unterschiedlicher Helligkeit gesteuert werden können. Sie sind auf den Bereich hinter dem Stoßfänger 30 gerichtet. Wird z.B. die an der rechten Fahrzeugseite 8 angeordnete Lichtquelle 19 stärker betrieben, als die an der linken Fahrzeugseite 6 angeordnete Lichtquelle 18, so entsteht der in der Figur 3 dargestellte Eindruck. Eine Richtungsausrichtung der Lichtquellen entsprechend einer nachzufahrenden Trajektorie kann zudem über eine schwenkbare Optik bzw. über schwenkbare Blenden erreicht werden.

## Patentansprüche

1. Verfahren zur Anzeige eines Fahrzeugfahrraums, wobei der Fahrzeugfahrraum perspektivisch oder dreidimensional dargestellt wird und wobei eine aktuelle Fahrrichtung und/oder eine einzunehmende Fahrrichtung des Fahrzeugs mittels einer Variation der Lichtverhältnisse in der Darstellung des Fahrzeugfahrraums angezeigt wird, **dadurch gekennzeichnet, dass** in der Anzeige (13) ein Umlenkpunkt (43) dargestellt ist, ab dem der Fahrer den Lenkeinschlag wechseln muss.

2. Verfahren nach Anspruch 1, **dadurch gekennzeichnet, dass** die Richtung, in die das Fahrzeug fahren soll, heller gegenüber einer Umgebung dargestellt wird.

3. Verfahren nach einem der vorherigen Ansprüche, **dadurch gekennzeichnet, dass** mittels Umfeldsensoren (3, 4, 7, 9) der Abstand zu Hindernissen(21, 22, 31) erfasst wird und dass aus den erfassten Abständen zu den Hindernissen (21, 22, 31) die Darstellung des Fahrzeugfahrraums bestimmt wird.

4. Verfahren nach einem der Ansprüche 2-3, **dadurch gekennzeichnet, dass** die Fahrzeugumgebung über eine Kamera (17) zur Darstellung des Fahrzeugfahrraums erfasst wird.

5. Verfahren nach Anspruch 4, **dadurch gekennzeichnet, dass** eine Veränderung der Lichtverhältnisse berechnet und in die von der Kamera (17) erfasste Darstellung des Fahrzeugfahrraums eingeblendet wird.

6. Verfahren nach Anspruch 4, **dadurch gekennzeichnet, dass** am Fahrzeug angeordnete Lichtquellen (18, 19) derart angesteuert werden, dass die Lichtverhältnisse in dem Kamerabild des Fahrzeugfahrraums variiert werden.

7. Verfahren nach Anspruch 6, **dadurch gekennzeichnet, dass** von den Lichtquellen (18,19) Infrarotlicht zur Beleuchtung des Fahrzeugfahrraums ausgestrahlt wird.

8. Verfahren nach einem der vorherigen Ansprüche, **dadurch gekennzeichnet, dass** eine Zielposition (23) des Fahrzeugs (1) in der Darstellung des Fahrraums angezeigt wird.

9. Verfahren nach einem der vorherigen Ansprüche, **dadurch gekennzeichnet, dass** Hindernisse (31) in der Darstellung durch Symbole (44) **gekennzeichnet** werden.

## Claims

1. Method for displaying the driving space around a vehicle, wherein the driving space around the vehicle is represented in perspective or three-dimensionally, and wherein a current driving direction of the vehicle and/or a driving direction which is to be assumed by the vehicle is displayed by means of a variation in the light conditions in the representation of the driving space around the vehicle, **characterized in that** a deflection point (43) starting from which the driver has to change the steering lock is represented in the display (13).

2. Method according to Claim 1, **characterized in that** the direction in which the vehicle is supposed to drive is given a lighter representation than its surroundings.

3. Method according to one of the preceding claims, **characterized in that** the distance from obstacles (21, 22, 31) is sensed by means of surroundings sensors (3, 4, 7, 9), and **in that** the representation of the driving space around the vehicle is determined from the sensed distances from the obstacles (21, 22, 31).

4. Method according to one of Claims 2-3, **characterized in that** the surroundings of the vehicle are captured by means of a camera (17) for representing the driving space around the vehicle.

5. Method according to Claim 4, **characterized in that** a change in the light conditions is calculated and is included in the representation of the driving space around the vehicle which is captured by the camera (17).

6. The method according to Claim 4, **characterized in that** light sources (18, 19) which are arranged on the vehicle are actuated in such a way that the light conditions in the camera image of the driving space around the vehicle are changed

7. Method according to Claim 6, **characterized in that** the light sources (18, 19) emit infrared light for illuminating the driving space around the vehicle.

8. Method according to one of the preceding claims, **characterized in that** a target position (23) of the vehicle (1) is displayed in the representation of the driving space.

9. Method according to one of the preceding claims, **characterized in that** obstacles (31) are **characterized in** the representation by means of symbols (44).

## Revendications

1. Procédé d'affichage de l'espace de déplacement d'un véhicule selon lequel on représente l'espace de déplacement du véhicule en perspective ou en trois dimensions et
on affiche la direction de déplacement actuelle et/ ou une direction de déplacement que le véhicule doit prendre, à l'aide d'une variation des conditions d'éclairage dans la représentation de l'espace de déplacement du véhicule,
**caractérisé en ce qu'**
un point d'inversion (43) est représenté sur l'affichage (13) à partir duquel le conducteur doit modifier son braquage.

2. Procédé selon la revendication 1,
**caractérisé en ce que**
la direction que le véhicule doit suivre est représentée plus claire par rapport à l'environnement.

3. Procédé selon l'une des revendications précédentes,
**caractérisé en ce que**
des capteurs de champ environnants (3, 4, 7, 9) saisissent la distance par rapport à des obstacles (21, 22, 31) et à partir des distances saisies par rapport aux obstacles (21, 22, 31) on définit la représentation de l'espace de déplacement du véhicule.

4. Procédé selon l'une des revendications 2 à 3,
**caractérisé en ce que**
l'environnement du véhicule est saisi par une caméra (17) pour représenter l'espace de déplacement du véhicule.

5. Procédé selon la revendication 4,
**caractérisé en ce qu'**
on calcule une variation des conditions d'éclairage et on incruste la représentation de l'espace de déplacement du véhicule saisi par la caméra (17).

6. Procédé selon la revendication 4,
**caractérisé en ce qu'**
on commande les sources lumineuses (18, 19) équipant le véhicule de façon à varier les conditions d'éclairage de caméra, de l'espace de déplacement du véhicule.

7. Procédé selon la revendication 6,
**caractérisé en ce qu'**
on émet de la lumière infrarouge par les sources lumineuses (18, 19) pour éclairer l'espace de déplacement du véhicule.

8. Procédé selon l'une des revendications précédentes,
**caractérisé en ce qu'**
on affiche la position de destination (23) du véhicule (1) dans la représentation de l'espace de déplacement.

9. Procédé selon l'une des revendications précédentes,
**caractérisé en ce qu'**
on distingue les obstacles (31) dans la représentation par des symboles (44).
